# FASCICULE DE BREVET EUROPEEN

(11) **EP 3 597 864 B1**
(45) Date de publication et mention de la délivrance du brevet: **23.06.2021**
(21) Numéro de dépôt: 19186588.0
(22) Date de dépôt: 16.07.2019
(51) Int. Cl.: F01D 9/04, F01D 11/00, F01D 25/24

(54) **ENSEMBLE D'ÉTANCHÉITÉ POUR UN ROTOR DE TURBINE DE TURBOMACHINE ET TURBINE DE TURBOMACHINE COMPRENANT UN TEL ENSEMBLE**
ABDICHTUNGSANORDNUNG FÜR EINEN TURBINENROTOR EINES TRIEBWERKS UND TURBINENROTOR EINES TRIEBWERKS, DER EINE SOLCHE ANORDNUNG UMFASST.
SEALING ASSEMBLY FOR A TURBINE ROTOR OF A TURBINE ENGINE AND TURBINE OF A TURBINE ENGINE COMPRISING SUCH AN ASSEMBLY

(30) Priorité: 18.07.2018 FR 1856670
(43) Date de publication de la demande: 22.01.2020
(73) Titulaire: SAFRAN AIRCRAFT ENGINES, 75015 Paris (FR)
(72) Inventeur: MORLIERE, Simon Nicolas, 77550 MOISSY-CRAMAYEL (FR); BEAUQUIN, Nicolas Jean-Marc Marcel, 77550 MOISSY-CRAMAYEL (FR); MILLIER, Vincent François Georges, 77550 MOISSY-CRAMAYEL (FR)
(74) Mandataire: Regimbeau

(56) Documents cités:
- WO-A1-2013/139837
- FR-A1- 3 060 051
- US-A1- 2014 241 874

## Description

### DOMAINE TECHNIQUE GENERAL

La présente invention concerne un ensemble d'étanchéité pour un rotor de turbine de turbomachine et une turbine de turbomachine, notamment de turboréacteur ou de turbopropulseur d'avion équipée d'un tel ensemble d'étanchéité.

### ETAT DE LA TECHNIQUE

Une turbomachine, en particulier une turbomachine à double corps, comporte classiquement, d'amont en aval, une soufflante, un compresseur basse pression, un compresseur haute pression, une chambre de combustion, une turbine haute pression et une turbine basse pression.

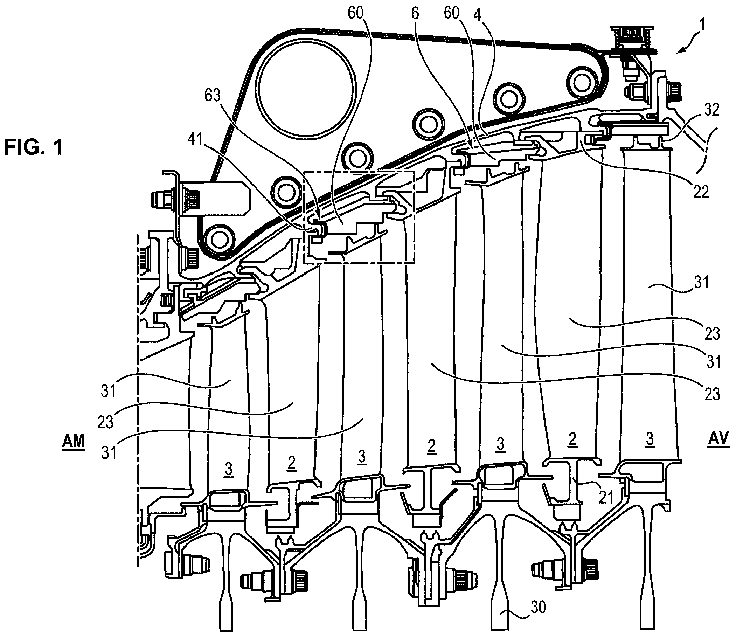

En se reportant à la figure 1 jointe, on peut voir un exemple d'une turbine 1 pour turbomachine conforme à l'état de la technique.

Cette turbine comprend plusieurs étages successifs comprenant chacun un distributeur aval 2 et une roue à aubes amont 3 .

Par convention, dans la présente demande, les termes " amont " AM et " aval " AV sont définis par rapport au sens de circulation de l'air dans la turbine, c'est-à-dire de la gauche vers la droite sur la figure 1. De même, par convention dans la présente demande, les termes " intérieur " et " extérieur", et " interne "et " externe " sont définis radialement par rapport à l'axe de la turbomachine.

Chaque distributeur 2 comprend une plate-forme annulaire radialement interne 21 et une plate-forme annulaire radialement externe 22 coaxiales, entre lesquelles s'étendent des aubes 23 radiales ou sensiblement radiales, régulièrement espacées sur toute la circonférence desdites plateformes.

Le distributeur 2 est accroché radialement vers l'extérieur à un carter externe 4 de la turbine.

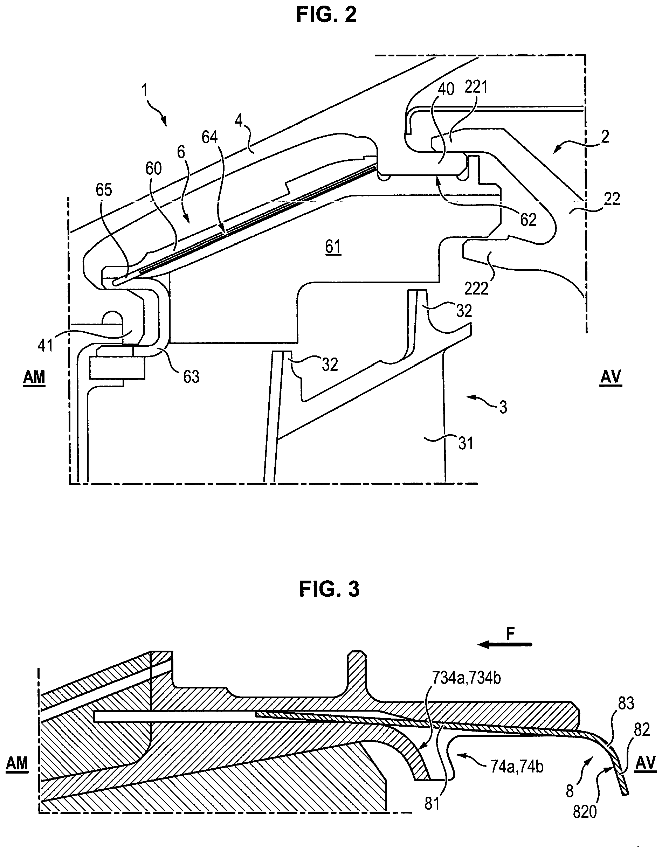

Comme cela apparaît mieux sur la figure 2 jointe, qui représente l'état de la technique, la plateforme annulaire externe 22 comprend à son extrémité amont, un rebord radialement externe 221 (ou becquet) et un rebord (ou becquet) radialement interne 222 qui s'étendent tous les deux vers l'amont. Ces deux rebords s'étendent de part et d'autre d'une gorge annulaire 223 ouverte vers l'amont AM.

L'ensemble des distributeurs 2 forme la partie fixe du moteur appelée "stator".

Chaque roue à aubes 3 comprend un disque 30 portant à sa périphérie externe des aubes 31 radiales ou sensiblement radiales, les disques 30 des différentes roues étant reliés coaxialement les uns aux autres et à un arbre d'entraînement par des moyens appropriés, de façon à former le "rotor" de la turbine (voir figure 1).

La roue à aubes 3 tourne à l'intérieur d'un anneau sectorisé 6 également accroché au carter externe 4. Cet anneau 6 est formé de plusieurs secteurs d'anneau 60, qui s'étendent circonférentiellement en arc-de-cercle, et qui sont agencés circonférentiellement bout à bout.

Les secteurs d'anneau 60 portent chacun intérieurement un bloc de matériau abradable 61. Ces blocs de matériau abradable sont capables de coopérer à frottement avec des léchettes annulaires 32 disposées à la périphérie radialement externe de chaque aube 31 du rotor.

Chaque secteur d'anneau 60 comprend à son extrémité aval, un secteur de gorge annulaire ouvert radialement vers l'extérieur. Lorsque les différents secteurs d'anneau 60 sont assemblés, les portions de gorges de chaque secteur d'anneau forment ensemble une gorge annulaire 62, dans laquelle est engagé un rail annulaire aval 40 du carter externe 4, jouant le rôle de crochet et assurant ainsi la fixation de l'anneau 6 sur le carter externe 4.

Le rail annulaire aval 40 et les extrémités aval des différents secteurs d'anneaux 60 sont maintenus selon une direction radiale (c'est-à-dire de bas en haut et de haut en bas sur la figure 2) par les rebords (becquets) interne 222 et externe 221 de la plateforme externe 22.

Par ailleurs, chaque secteur d'anneau 60 comprend à son extrémité amont, un organe circonférentiel 63 à section en C, qui est engagé axialement depuis l'aval sur un rail annulaire amont 41 du carter extérieur 4.

Par ailleurs, afin d'assurer l'étanchéité entre les différents secteurs d'anneau 60 et de limiter les fuites de gaz chaud vers l'extérieur de la veine, au moins un organe d'étanchéité 64 (tel qu'une plaquette ou une languette d'étanchéité) s'étend entre les extrémités circonférentielles des différents secteurs d'anneau 60.

Plus précisément, une plaquette d'étanchéité 64 plane sensiblement rectangulaire est montée pour partie dans un logement 65 d'un bord circonférentiel d'un secteur d'anneau 60 et pour une autre partie dans un logement 65 d'un bord circonférentiel d'un secteur d'anneau 60 adjacent, situé en vis-à-vis. La plaquette 64 chevauche ainsi l'espace inter-secteurs entre deux secteurs d'anneau 60 adjacents.

Il existe toujours des possibilités de fuites d'air entre deux secteurs d'anneau 60 voisins

Par ailleurs, les différents secteurs d'anneau 60 sont assemblés successivement par un montage en bascule l'un par rapport à l'autre, ce qui provoque temporairement un écart de position trop important entre les deux logements 65 (fentes) situés en regard l'un de l'autre, pour permettre le montage des plaquettes d'étanchéité 64 avant que tous les secteurs d'anneau 60 n'aient été assemblés entre eux.

On connaît d'après le document FR 3 060 051, un ensemble d'étanchéité pour un rotor de turbine de turbomachine, qui présente les caractéristiques du préambule de la revendication 1. Toutefois, l'ensemble d'étanchéité qui y est décrit ne décrit pas le fait que l'extrémité aval des secteurs d'anneaux puisse être engagée dans le clinquant anti usure, ni le fait que les premiers et second logements sont formés par une rainure comprenant une paroi radialement externe et une paroi radialement interne qui s'étendent axialement, ni enfin le fait que la languette d'étanchéité est coudée à son extrémité aval et disposée dans les rainures situées en vis-à-vis, de façon que son extrémité aval s'étendent hors des rainures pour pouvoir venir en regard du clinquant anti-usure.

On connaît également d'après le document WO 2013/139837, un anneau d'étanchéité comprenant plusieurs secteurs d'anneaux s'étendant circonférentiellement et munis de rainures se faisant face. Une languette d'étanchéité est insérée dans deux rainures situées en vis-à-vis. Toutefois, ce document ne décrit absolument pas la forme axiale des rainures, ni la forme de la languette d'étanchéité conforme à l'invention.

### PRESENTATION DE L'INVENTION

L'invention a donc pour objectif d'améliorer l'étanchéité entre les différents secteurs d'un anneau de rotor tout en permettant un montage aisé des organes d'étanchéité, une fois que lesdits secteurs d'anneau sont tous montés sur le carter extérieur de la turbomachine.

Un autre objectif de l'invention est de garantir un bon maintien desdits organes d'étanchéité au cours du fonctionnement de la turbine, ainsi qu'un démontage aisé de ces organes.

A cet effet, l'invention concerne un ensemble d'étanchéité pour un rotor de turbine de turbomachine, ladite turbine comprenant un carter externe fixe et plusieurs étages comprenant chacun une roue à aubes de rotor amont et un distributeur aval, ledit distributeur comprenant au moins une aube s'étendant entre une plateforme radialement interne et une plateforme radialement externe, la plateforme radialement externe comprenant un becquet à son extrémité amont qui délimite avec la plateforme radialement externe une gorge annulaire ouverte vers l'amont, l'ensemble d'étanchéité comprenant un anneau d'étanchéité configuré pour être fixé au carter externe, la roue à aubes étant destinée à être entrainée en rotation à l'intérieur de l'anneau d'étanchéité, l'anneau d'étanchéité comprenant plusieurs secteurs d'anneau, qui s'étendent circonférentiellement autour de son axe longitudinal en étant adjacents dans la direction circonférentielle, une languette d'étanchéité étant engagée pour partie dans un premier logement d'un secteur d'anneau et pour une autre partie dans un second logement d'un secteur d'anneau adjacent, ledit premier logement et ledit second logement débouchant en vis-à-vis l'un de l'autre et vers l'aval par une embouchure aval et un clinquant anti-usure, en forme de goulotte ouverte vers l'amont étant monté dans la gorge.

Conformément à l'invention, l'extrémité aval des secteurs d'anneau est configurée pour être engagée dans ledit clinquant anti-usure, chacun des premier et second logements est formé par une rainure comprenant une paroi radialement externe et une paroi radialement interne qui s'étendent axialement et la languette d'étanchéité est coudée à son extrémité aval et est disposée dans les rainures situées en vis-à-vis, de façon que son extrémité aval s'étende hors des rainures et soit disposée en regard du clinquant anti-usure.

Grâce à ces caractéristiques de l'invention, l'air circulant dans la veine de la turbine et qui vient heurter l'extrémité aval coudée de la languette d'étanchéité après être passé entre deux secteurs voisins de l'anneau d'étanchéité, est redirigé vers l'intérieur de la veine et ne peut plus s'échapper vers l'extérieur et vers l'aval.

De préférence, la paroi radialement interne de chaque rainure se prolonge au niveau de l'embouchure aval de ladite rainure par une partie inclinée qui s'évase depuis ladite rainure en direction de l'axe longitudinal de l'anneau d'étanchéité, chaque rainure étant ainsi configurée de sorte que la languette d'étanchéité puisse y être insérée par insertion axiale depuis l'aval et que lorsqu'elle y est insérée, la face radialement interne de son extrémité aval soit en contact avec ladite partie inclinée. La forme spécifique de la rainure de réception de ladite languette d'étanchéité et notamment sa large embouchure, permet d'avoir un accès aisé à l'extrémité aval de ladite languette. Ceci permet également de la retirer plus facilement lorsque l'on souhaite démonter les différents secteurs d'anneau, par exemple lors d'opérations de maintenance de la turbine.

Selon d'autres caractéristiques avantageuses et non limitatives de l'invention, prises seules ou en combinaison :
- la paroi radialement externe de chaque rainure se prolonge au niveau de l'embouchure aval de ladite rainure par une partie inclinée en direction de l'axe longitudinal de l'anneau d'étanchéité, de façon à limiter le déplacement axial de la languette d'étanchéité vers l'aval ;
- l'ensemble d'étanchéité comprend un distributeur disposé en aval de l'anneau d'étanchéité, le distributeur comprenant au moins une d'aube s'étendant entre une plateforme radialement interne et une plateforme radialement externe, la plateforme radialement externe comprenant un becquet à son extrémité amont qui délimite avec la plateforme radialement externe une gorge annulaire ouverte vers l'amont le clinquant anti-usure, en forme de goulotte ouverte vers l'amont, étant monté dans ladite gorge du distributeur, et l'extrémité aval des secteurs d'anneau étant engagée dans ledit clinquant anti-usure de sorte que l'extrémité aval de la languette d'étanchéité est en regard du clinquant anti-usure, en ce que le clinquant anti-usure comprend un fond, une paroi radialement externe et une paroi radialement interne et en ce que ce clinquant est positionné dans ladite gorge annulaire de façon que sa paroi radialement externe soit au contact de la face radialement intérieure du becquet et que sa paroi radialement interne soit au contact de la face radialement extérieure du rebord amont de la plateforme radialement externe ;
- le clinquant anti-usure présente une extrémité radialement externe recourbée qui s'étend en regard de la face amont du becquet radialement externe ;
- le clinquant anti-usure présente une extrémité radialement interne recourbée qui s'étend en regard de la face amont du becquet radialement externe de la plateforme radialement externe ;
- le bord de l'extrémité aval de la languette d'étanchéité est recourbé vers l'extérieur par rapport à l'axe longitudinal de l'anneau d'étanchéité ;
- le bord de l'extrémité aval de la languette d'étanchéité est en contact avec le fond et la paroi radialement interne dudit clinquant anti-usure ;
- les secteurs d'anneau comprennent chacun à leur extrémité aval, une gorge ouverte radialement vers l'extérieur, qui est configurée pour recevoir un crochet du carter externe.

L'invention concerne également une turbine de turbomachine, notamment de turboréacteur ou de turbopropulseur d'avion, comprenant un carter externe fixe et plusieurs étages comprenant chacun une roue à aubes de rotor amont et un distributeur aval, ledit distributeur comprenant au moins une aube s'étendant entre une plateforme radialement interne et une plateforme radialement externe, la plateforme radialement externe comprenant un becquet à son extrémité amont qui délimite avec la plateforme radialement externe une gorge annulaire ouverte vers l'amont, cette turbine comprenant un ensemble d'étanchéité tel que précité.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, différents mode de réalisation possibles.

Sur ces dessins :
- la figure 1 est une vue en coupe d'une turbine basse pression selon l'état de la technique,
- la figure 2 est une vue de détail d'une partie de la turbine de la figure 1,
- la figure 3 est une vue schématique représentant l"introduction d'une languette d'étanchéité conforme à l'invention à l'intérieur d'un secteur d'anneau, également conforme à l'invention,
- la figure 4 est une vue en perspective des extrémités aval de deux secteurs d'anneau voisins du rotor et de la languette d'étanchéité, conformes à l'invention,
- la figure 5 est une vue similaire à celle de la figure 4 mais dans laquelle l'un des secteurs d'anneau a été retiré,
- la figure 6 est une vue de détail représentant une première variante de réalisation de la languette d'étanchéité conforme à l'invention,
- la figure 7 est une vue de détail d'un secteur d'anneau de rotor conforme à l'invention, et
- la figure 8 est une vue de détail représentant une seconde variante de réalisation de la languette d'étanchéité conforme à l'invention.

### DESCRIPTION DETAILLEE DE L'INVENTION

La turbine, conforme à l'invention, va maintenant être décrite plus en détail en faisant référence notamment aux figures 3 à 7.

Les éléments qui sont identiques à ceux de la turbine précédemment décrite en liaison avec les figures 1 et 2 ne seront pas décrits de nouveau et portent les mêmes références numériques.

La turbine selon l'invention diffère notamment de la précédente par son ensemble d'étanchéité inter-secteurs d'anneau.

Cet ensemble d'étanchéité comprend un anneau d'étanchéité 7, plusieurs languettes d'étanchéité 8.

La roue à aube 3 tourne à l'intérieur de l'anneau d'étanchéité référencé 7. Cet anneau qui s'étend autour de la roue à aube 3 est fixé à un carter 4 externe de turbine. Il est formé de plusieurs secteurs d'anneau, adjacents dans la direction circonférentielle et agencés bout à bout, chacun étant fixé au carter 4 externe de turbine.

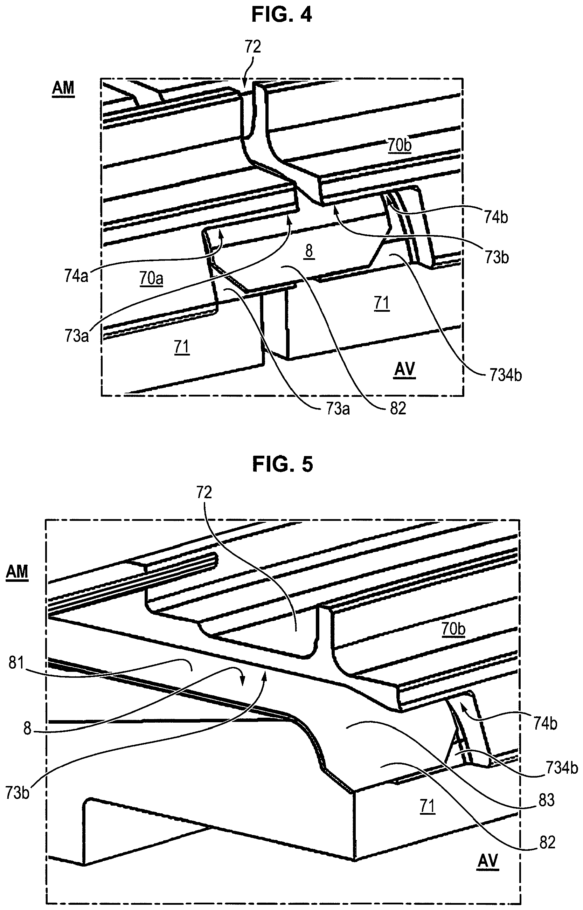

Sur la figure 4, on peut ainsi voir deux secteurs d'anneau adjacents, ici référencés 70a, 70b.

Chaque secteur d'anneau comporte un bloc de matériau abradable 71, capable de coopérer avec les léchettes 32 des aubes 31 du rotor situé en regard.

Chaque secteur d'anneau 70a, 70b comprend à son extrémité aval, une portion de gorge annulaire 72 ouverte radialement vers l'extérieur. Lorsque les différents secteurs d'anneau 70a, 70b sont assemblés, ces portions de gorge définissent ensemble une gorge annulaire 72, dans laquelle est engagé le rail annulaire aval 40 du carter externe 4, de façon à assurer la fixation sur celui-ci.

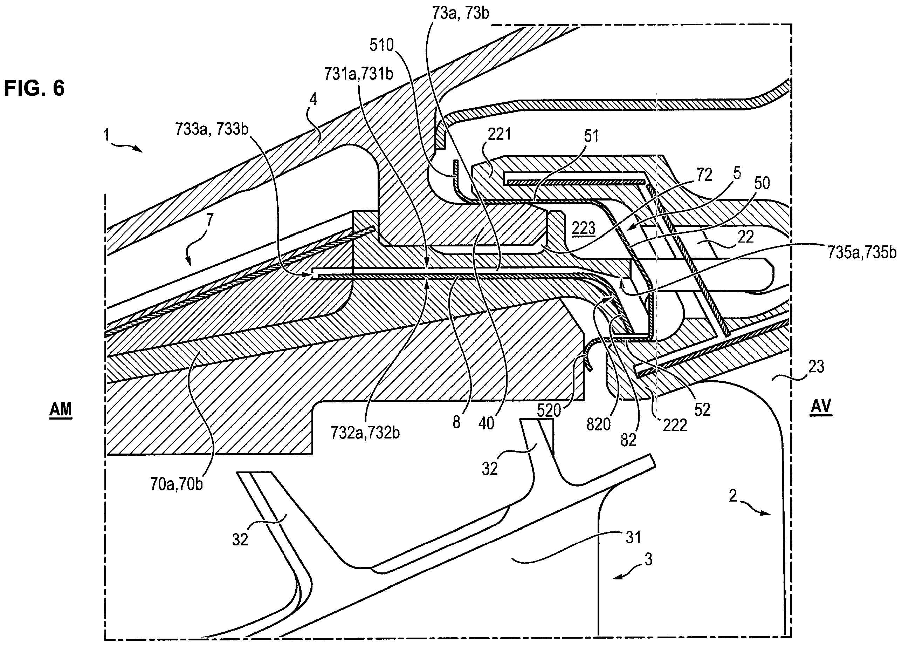

Bien que cela ne soit pas visible sur la figure 6, chaque secteur d'anneau 70, 70a, 70b est également fixé à sa partie amont sur le rail amont 41 du carter 4, par un organe circonférentiel à section en C, semblable à celui décrit précédemment pour le mode de réalisation de la figure 2.

Afin d'assurer l'étanchéité inter-secteurs, un organe d'étanchéité 8, 8' est engagé pour partie dans un premier logement 73a du secteur d'anneau 70a et pour une autre partie dans un second logement 73b du secteur d'anneau 70b adjacent, en chevauchant ainsi l'espace inter-secteurs existant entre ces deux secteurs d'anneau adjacents.

Ledit premier logement 73a et ledit second logement 73b débouchent sur les faces circonférentielles de leurs secteurs d'anneau respectifs 70a et 70b et chacun d'entre eux débouche également vers l'aval de la turbine. Les logements 73a, 73b sont en vis-à-vis l'un de l'autre lorsque les deux secteurs 70a et 70b sont assemblés

Chaque logement 73a, 73b est ménagé dans la partie aval du secteur d'anneau 70a, respectivement 70b, et sous le secteur de gorge 72.

De préférence, chaque logement 73a, 73b a la forme d'une rainure.

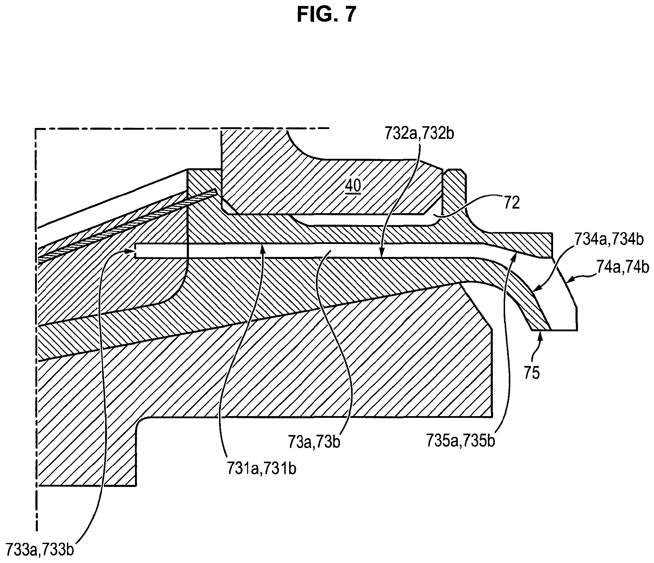

Comme on peut le voir sur la figure 7, cette rainure 73a, respectivement 73b comporte une paroi radialement externe 731a, respectivement 731b et une paroi radialement interne 732a, respectivement 732b, s'étendant axialement (c'est-à-dire selon l'axe de la turbine) ou sensiblement axialement. Elles sont reliées entre elles par une paroi de fond 733a, respectivement 733b s'étendant radialement.

Chaque paroi de fond 733a, 733b s'étend à l'opposé de l'embouchure 74a, respectivement 74b des rainures 70a, 70b.

La paroi radialement interne 732a, respectivement 732b, se prolonge en direction de l'embouchure aval 74a, 74b par une partie inclinée 734a, respectivement 734b qui s'évase depuis ladite rainure, en direction de l'axe longitudinal de l'anneau d'étanchéité 7, c'est-à-dire vers l'intérieur de la turbine (vers le bas de la figure 7).

De préférence, la paroi radialement externe 731a, 731b se prolonge au niveau de l'embouchure aval 74a, 74b par une partie 735a, 735b légèrement inclinée en direction de l'axe longitudinal de l'anneau d'étanchéité 7.

Comme on peut le voir sur la figure 6, le cliquant anti-usure 5 est monté dans la gorge 223 du distributeur 2. Il présente une forme de goulotte ouverte vers l'amont. Il est soit annulaire, soit constitué de plusieurs secteurs d'anneaux. Le clinquant 5 est réalisé dans une tôle fine, par exemple comprise entre 0,1mm et 1 mm d'épaisseur, ce qui lui confère une certaine élasticité. De préférence, il est fabriqué dans un alliage particulièrement résistant à l'usure et aux contraintes thermiques, tel qu'un alliage à base de cobalt et de nickel.

Comme on peut le voir sur la figure 6, le clinquant 5 en forme de goulotte comprend un fond 50, une paroi radialement externe 51 et une paroi radialement interne 52.

Ce clinquant 5 est disposé dans la gorge 223 de façon que sa paroi radialement externe 51 soit au contact de la face radialement intérieure du becquet externe 221 et que sa paroi radialement interne 52 soit au contact de la face radialement extérieure du becquet interne 222 de la plateforme radialement externe 22. Son élasticité lui permet d'y rester maintenu.

De façon avantageuse, on notera également que le clinquant 5 présente une extrémité radialement externe 510 recourbée vers l'extérieur de la turbine, de sorte qu'elle s'étend devant la face amont du becquet radialement externe 221 de la plateforme externe 22.

De préférence également, le clinquant 5 présente une extrémité radialement interne 520 recourbée vers l'intérieur de la turbine et qui s'étend en regard de la face amont du becquet radialement interne 222 de la plateforme externe 22 du distributeur 2.

Les extrémités 510, 520 assurent le blocage axial du clinquant.

Le rôle que le clinquant 5 joue dans l'étanchéité sera expliqué ultérieurement.

Par ailleurs, selon un premier mode de réalisation de l'invention représenté sur les figures 3 à 5 et 8, l'organe d'étanchéité 8 se présente sous la forme d'une languette, sensiblement rectangulaire, coudée à son extrémité aval.

La languette d'étanchéité 8 est avantageusement réalisée dans une tôle métallique de faible épaisseur, (par exemple comprise entre 0,1mm et 1mm) de sorte qu'elle présente une certaine élasticité. Le matériau choisi est également résistant à l'usure et aux contraintes thermiques, on peut utiliser par exemple un alliage à base nickel ou cobalt. Elle présente une partie principale 81 et une extrémité aval 82 jointe par une partie coudée 83.

Cette languette d'étanchéité 8 est insérée à l'intérieur des deux logements (rainures) 73a, 73b situés en vis-à-vis, comme représenté sur le schéma de la figure 3. Cette introduction se fait de l'aval AV vers l'amont AM selon le sens de déplacement représenté par la flèche F.

Lorsque la languette 8 est complètement insérée dans les rainures, (comme représenté sur les figures 4 à 6), alors la face radialement interne 820 de son extrémité aval 82 est en contact avec les parties inclinées 734a et 734b respectives des logements 73a, respectivement 73b.

On notera que la partie 735a, 735b de la paroi radialement externe, de par sa forme légèrement inclinée vers l'intérieur, tend à retenir la languette 8 une fois celle-ci en place et à empêcher son déplacement axial vers l'aval AV de la turbine.

A cet effet, on notera que l'angle d'inclinaison de l'extrémité 82 par rapport à la partie 81 de la languette 8 est le même que l'angle d'inclinaison des parties inclinées 734a, 734b par rapport aux parois radialement internes 732a, 732b.

En outre, comme cela est visible sur la figure 6, l'extrémité aval des secteurs d'anneaux 70a, 70b est engagée dans la partie concave du clinquant 5. Dans cette position, le rail annulaire aval 40 repose contre la face radialement intérieure de la paroi radialement externe 51 du clinquant 5 tandis que la face radialement intérieure 75 (voir figure 7) de l'extrémité aval des secteurs d'anneaux 70a, 70b est disposée en regard de la face radialement externe de la paroi radialement interne 52 du clinquant 5.

Selon un autre mode de réalisation non représenté sur les figures, la face radialement intérieure 75 des secteurs d'anneaux 70a, 70b repose directement contre la face radialement externe de la paroi radialement interne 52 du clinquant 5.

Lorsque la languette d'étanchéité 8 est en place, l'air circulant dans la veine de la turbine ne peut plus sortir au niveau de l'embouchure 74a, 74b et il est rabattu vers l'intérieur de la veine par l'extrémité aval 82 de ladite languette d'étanchéité.

De plus, l'extrémité aval recourbée 82 se trouve en regard du fond 50 du clinquant 5 qui constitue alors une deuxième barrière d'étanchéité puisque l'air ne peut s'écouler entre l'extrémité aval de l'anneau d'étanchéité 7 et la gorge 223 du distributeur 2.

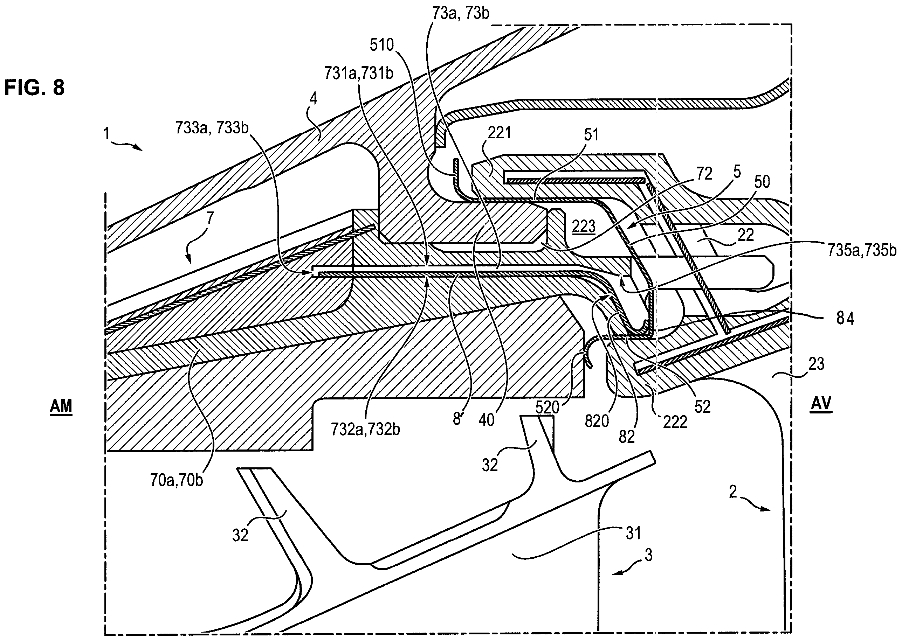

Selon un second mode de réalisation de l'invention, représenté sur la figure 8, le bord 84 de l'extrémité aval 82 de la lamelle d'étanchéité est recourbé vers l'extérieur (c'est-à-dire vers l'extérieur de la turbine lorsque la languette est dans la rainure 73a, 73b). L'anneau 7 et le clinquant 5 restent identiques.

Cette languette d'étanchéité est alors référencée 8'.

Ainsi, lorsque l'extrémité aval des secteurs d'anneau 70a, 70b et le rail 40 du carter externe 4 sont insérés dans la partie concave du clinquant 5 disposée dans le logement 223 de la plateforme radialement externe 22 du distributeur 2, alors le bord 84 vient en contact avec le fond 50 et la paroi radialement interne 52 du clinquant 5. Ceci renforce encore le blocage axial de la languette d'étanchéité 8' et l'étanchéité globale de l'ensemble d'étanchéité conforme à l'invention grâce au contact direct entre le bord 84 et le clinquant 5.

## Revendications

1. Ensemble d'étanchéité pour un rotor de turbine (1) de turbomachine, ladite turbine comprenant un carter externe (4) fixe et plusieurs étages comprenant chacun une roue à aubes de rotor (3) amont et un distributeur (2) aval, ledit distributeur (2) comprenant au moins une aube (23) s'étendant entre une plateforme radialement interne (21) et une plateforme radialement externe (22), la plateforme radialement externe (22) comprenant, à son extrémité amont, un becquet radialement externe (221) et un becquet radialement interne (222) qui délimitent une gorge annulaire (223) ouverte vers l'amont, l'ensemble d'étanchéité comprenant un anneau d'étanchéité (7) configuré pour être fixé au carter externe (4), la roue à aubes (3) étant destinée à être entrainée en rotation à l'intérieur de l'anneau d'étanchéité, l'anneau d'étanchéité (7) comprenant plusieurs secteurs d'anneau (70a, 70b), qui s'étendent circonférentiellement autour de son axe longitudinal en étant adjacents dans la direction circonférentielle, une languette d'étanchéité (8, 8') étant engagée pour partie dans un premier logement (73a) d'un secteur d'anneau (70a) et pour une autre partie dans un second logement (73b) d'un secteur d'anneau adjacent (70b), ledit premier logement et ledit second logement débouchant en vis-à-vis l'un de l'autre et vers l'aval par une embouchure aval (74a, 74b), et un clinquant anti-usure (5), en forme de goulotte ouverte vers l'amont étant monté dans la gorge (223), **caractérisé en ce que** l'extrémité aval des secteurs d'anneau (70a, 70b) est configurée pour être engagée dans ledit clinquant anti-usure (5), **en ce que** chacun des premier et second logements (73a, 73b) est formé par une rainure comprenant une paroi radialement externe (731a, 731b) et une paroi radialement interne (732a, 732b) qui s'étendent axialement et **en ce que** la languette d'étanchéité (8, 8') est coudée à son extrémité aval (82) et est disposée dans les rainures situées en vis-à-vis, de façon que son extrémité aval (82) s'étende hors des rainures pour pouvoir venir en regard du clinquant anti-usure (5).

2. Ensemble d'étanchéité selon la revendication 1, **caractérisé en ce que** la paroi radialement interne (732a, 732b) de chaque rainure se prolonge au niveau de l'embouchure aval de ladite rainure par une partie inclinée (734a, 734b) qui s'évase depuis ladite rainure en direction de l'axe longitudinal de l'anneau d'étanchéité (7), chaque rainure (73a, 73b) étant ainsi configurée de sorte que la languette d'étanchéité (8,8') puisse y être insérée par insertion axiale depuis l'aval et que lorsqu'elle y est insérée, la face radialement interne (820) de son extrémité aval (82) soit en contact avec ladite partie inclinée (734a, 734b).

3. Ensemble d'étanchéité selon la revendication 1 ou 2, **caractérisé en ce que** la paroi radialement externe (731a, 731b) de chaque rainure (73a, 73b) se prolonge au niveau de l'embouchure aval de ladite rainure par une partie ((735a, 735b) inclinée en direction de l'axe longitudinal de l'anneau d'étanchéité (7), de façon à limiter le déplacement axial de la languette d'étanchéité (8,8') vers l'aval.

4. Ensemble d'étanchéité selon la revendication 1 ou 2, **caractérisé en ce que** le distributeur (2) est disposé en aval de l'anneau d'étanchéité (7), et **en ce que** l'extrémité aval des secteurs d'anneau (70a, 70b) est engagée dans ledit clinquant anti-usure (5) de sorte que l'extrémité aval de la languette d'étanchéité (8, 8') est en regard du clinquant anti-usure (5), **en ce que** le clinquant anti-usure (5) comprend un fond (50), une paroi radialement externe (51) et une paroi radialement interne (52) et **en ce que** ce clinquant (5) est positionné dans ladite gorge annulaire (223) de façon que sa paroi radialement externe (51) soit au contact de la face radialement intérieure du becquet radialement externe (221) et que sa paroi radialement interne (52) soit au contact de la face radialement extérieure du becquet radialement interne (222) de la plateforme radialement externe (22).

5. Ensemble d'étanchéité selon la revendication 4, **caractérisé en ce que** le clinquant anti-usure (5) présente une extrémité radialement externe recourbée (510) qui s'étend en regard de la face amont du becquet radialement externe (221).

6. Ensemble d'étanchéité selon la revendication 4 ou 5, **caractérisé en ce que** le clinquant anti-usure (5) présente une extrémité radialement interne recourbée (520) qui s'étend en regard de la face amont du becquet radialement interne (222) de la plateforme radialement externe (22).

7. Ensemble d'étanchéité selon l'une quelconque des revendications précédentes, **caractérisé en ce que** le bord (84) de l'extrémité aval (82) de la languette d'étanchéité (8') est recourbé vers l'extérieur par rapport à l'axe longitudinal de l'anneau d'étanchéité (7).

8. Ensemble d'étanchéité selon les revendications 4 et 7, **caractérisé en ce que** le bord (84) de l'extrémité aval (82) de la languette d'étanchéité (8) est en contact avec le fond (50) et la paroi radialement interne (52) dudit clinquant anti-usure (5).

9. Ensemble d'étanchéité selon l'une des revendications précédentes, **caractérisé en ce que** les secteurs d'anneau (70a, 70b) comprennent chacun à leur extrémité aval, une gorge (72) ouverte radialement vers l'extérieur, qui est configurée pour recevoir un crochet (40) du carter externe (4).

10. Turbine de turbomachine, notamment de turboréacteur ou de turbopropulseur d'avion, comprenant un carter externe (4) fixe et plusieurs étages comprenant chacun une roue à aubes de rotor (3) amont et un distributeur (2) aval, ledit distributeur (2) comprenant au moins une aube (23) s'étendant entre une plateforme radialement interne (21) et une plateforme radialement externe (22), la plateforme radialement externe (22) comprenant, à son extrémité amont, un becquet radialement externe (221) et un becquet radialement interne (222) qui délimitent une gorge annulaire (223) ouverte vers l'amont, **caractérisée en ce qu'**elle comprend un ensemble d'étanchéité selon l'une des revendications 1 à 9.

## Patentansprüche

1. Abdichtungseinheit für einen Turbinenrotor (1) eines Turbotriebwerks, wobei die Turbine ein festes äußeres Gehäuse (4) und mehrere Stufen umfasst, die jeweils ein vorgelagertes Rotorschaufelrad (3) und einen nachgelagerten Verteiler (2) umfassen, wobei der Verteiler (2) mindestens eine Schaufel (23) umfasst, die sich zwischen einer radial inneren Plattform (21) und einer radial äußeren Plattform (22) erstreckt, wobei die radial äußere Plattform (22) an ihrem vorgelagerten Ende einen radial äußeren Spoiler (221) und einen radial inneren Spoiler (222) umfasst, die eine nach stromaufwärts offene ringförmige Nut (223) begrenzen, wobei die Abdichtungseinheit einen Dichtring (7) umfasst, der ausgelegt ist, um an dem äußeren Gehäuse (4) befestigt zu sein, wobei das Schaufelrad (3) bestimmt ist, im Inneren des Dichtrings rotierend angetrieben zu sein, wobei der Dichtring (7) mehrere Ringsektoren (70a, 70b) umfasst, die sich umfänglich um seine Längsachse erstrecken, wobei sie in der Umfangsrichtung benachbart sind, wobei eine Dichtungslippe (8, 8') teilweise in eine erste Aufnahme (73a) eines Ringsektors (70a) und für einen anderen Teil in eine zweite Aufnahme (73b) eines benachbarten Ringsektors (70b) eingeführt ist, wobei die erste Aufnahme und die zweite Aufnahme einander gegenüber nach stromabwärts durch eine nachgelagerte Mündung (74a, 74b) ausmünden, und ein Anti-Verschleiß-Blech (5) in Form einer nach stromaufwärts offenen Rinne in der Nut (223) angebracht ist, **dadurch gekennzeichnet, dass** das nachgelagerte Ende der Ringsektoren (70a, 70b) ausgelegt ist, um in das Anti-Verschleiß-Blech (5) eingeführt zu sein, dass jede von der ersten und zweiten Aufnahme (73a, 73b) von einer Rille gebildet ist, die eine radial äußere Wand (731a, 731b) und eine radial innere Wand (732a, 732b) umfasst, die sich axial erstrecken und dass die Dichtungslippe (8, 8') an ihrem nachgelagerten Ende (82) abgewinkelt ist und in den sich gegenüber befindenden Rillen derart angeordnet ist, dass sich ihr nachgelagertes Ende (82) außerhalb der Rillen erstreckt, um dem Anti-Verschleiß-Blech (5) zugewandt sein zu können.

2. Abdichtungseinheit nach Anspruch 1, **dadurch gekennzeichnet, dass** sich die radial innere Wand (732a, 732b) jeder Rille im Bereich der nachgelagerten Mündung der Rille mittels eines schrägen Teils (734a, 734b) verlängert, der sich ab der Rille in Richtung der Längsachse des Dichtrings (7) erweitert, wobei jede Rille (73a, 73b) somit derart ausgelegt ist, dass die Dichtungslippe (8, 8') dort von stromabwärts durch axiales Einsetzen einsetzbar ist und dass, wenn sie dort eingesetzt ist, die radial innere Fläche (820) ihres nachgelagerten Endes (82) mit dem schrägen Teil (734a, 734b) in Kontakt ist.

3. Abdichtungseinheit nach Anspruch 1 oder 2, **dadurch gekennzeichnet, dass** sich die radial äußere Wand (731a, 731b) jeder Rille (73a, 73b) im Bereich der nachgelagerten Mündung der Rille mittels eines schrägen Teils (735a, 735b) in Richtung der Längsachse des Dichtrings (7) derart verlängert, dass die axiale Verlagerung der Dichtungslippe (8,8') nach stromabwärts begrenzt wird.

4. Abdichtungseinheit nach Anspruch 1 oder 2, **dadurch gekennzeichnet, dass** der Verteiler (2) dem Dichtring (7) nachgelagert angeordnet ist und das nachgelagerte Ende der Ringsektoren (70a, 70b) in das Anti-Verschleiß-Blech (5) derart eingeführt ist, dass das nachgelagerte Ende der Dichtungslippe (8, 8') dem Anti-Verschleiß-Blech (5) zugewandt ist, dass das Anti-Verschleiß-Blech (5) einen Boden (50), eine radial äußere Wand (51) und eine radial innere Wand (52) umfasst und dass dieses Blech (5) in der ringförmigen Nut (223) derart positioniert ist, dass seine radial äußere Wand (51) mit der radial inneren Fläche des radial äußeren Spoilers (221) in Kontakt ist und dass seine radial innere Wand (52) mit der radial äußeren Fläche des radial inneren Spoilers (222) der radial äußeren Plattform (22) in Kontakt ist.

5. Abdichtungseinheit nach Anspruch 4, **dadurch gekennzeichnet, dass** das Anti-Verschleiß-Blech (5) ein gekrümmtes radial äußeres Ende (510) aufweist, das sich der vorgelagerten Fläche des radial äußeren Spoilers (221) zugewandt erstreckt.

6. Abdichtungseinheit nach Anspruch 4 oder 5, **dadurch gekennzeichnet, dass** das Anti-Verschleiß-Blech (5) ein gekrümmtes radial inneres Ende (520) aufweist, das sich der vorgelagerten Fläche des radial inneren Spoilers (222) der radial äußeren Plattform (22) zugewandt erstreckt.

7. Abdichtungseinheit nach einem der vorangehenden Ansprüche, **dadurch gekennzeichnet, dass** der Rand (84) des nachgelagerten Endes (82) der Dichtungslippe (8') in Bezug auf die Längsachse des Dichtrings (7) nach außen gekrümmt ist.

8. Abdichtungseinheit nach den Ansprüchen 4 und 7, **dadurch gekennzeichnet, dass** der Rand (84) des nachgelagerten Endes (82) der Dichtungslippe (8) mit dem Boden (50) und der radial inneren Wand (52) des Anti-Verschleiß-Blechs (5) in Kontakt ist.

9. Abdichtungseinheit nach einem der vorangehenden Ansprüche, **dadurch gekennzeichnet, dass** die Ringsektoren (70a, 70b) jeweils an ihrem nachgelagerten Ende eine radial nach außen offene Nut (72) umfassen, die ausgelegt ist, um einen Haken (40) des äußeren Gehäuses (4) aufzunehmen.

10. Turbine eines Turbotriebwerks, insbesondere eines Strahltriebwerks oder eines Turboproptriebwerks eines Flugzeugs, umfassend ein festes äußeres Gehäuse (4) und mehrere Stufen, die jeweils ein vorgelagerte Rotorschaufelrad (3) und einen nachgelagerten Verteiler (2) umfassen, wobei der Verteiler (2) mindestens eine Schaufel (23) umfasst, die sich zwischen einer radial inneren Plattform (21) und einer radial äußeren Plattform (22) erstreckt, wobei die radial äußere Plattform (22) an ihrem vorgelagerten Ende einen radial äußeren Spoiler (221) und einen radial inneren Spoiler (222) umfasst, die eine nach stromaufwärts offene ringförmige Nut (223) begrenzen, **dadurch gekennzeichnet, dass** sie eine Abdichtungseinheit nach einem der Ansprüche 1 bis 9 umfasst.

## Claims

1. A sealing assembly for a turbine (1) rotor of a turbomachine, said turbine comprising a fixed outer casing (4) and a plurality of stages each comprising an upstream rotor impeller (3) and a downstream nozzle (2), said nozzle (2) comprising at least one blade (23) extending between a radially inner platform (21) and a radially outer platform (22), the radially outer platform (22) comprising at its upstream end, a radially outer spoiler (221) and a radially inner spoiler (222) which delimit an annular groove (223) open toward the upstream, the sealing assembly comprising a sealing ring (7) configured to be attached to the outer casing (4), the impeller (3) being adapted to be driven in rotation inside the sealing ring, the sealing ring (7) comprising a plurality of ring sectors (70a, 70b) which extend circumferentially about its longitudinal axis by being adjacent in the circumferential direction, a sealing tab (8, 8') being engaged, for a part, in a first housing (73a) of a ring sector (70a) and, for another part, in a second housing (73b) of an adjacent ring sector (70b), said first housing and said second housing opening opposite each other and toward the downstream through a downstream mouth (74a, 74b), and an anti-wear foil (5), trunking-shaped, open toward the upstream, mounted in the groove (223), **characterized in that** the downstream end of the ring sectors (70a, 70b) is configured to be engaged in said anti-wear foil (5), **in that** each of the first and second housings (73a, 73b) is formed by a slot comprising a radially outer wall (731a, 731b) and a radially inner wall (732a, 732b) which extend axially and **in that** the sealing tab (8, 8') is bent at its downstream end (82) and is disposed in the slots located oppositely, so that its downstream end (82) extends out of the slots to be able to face the anti-wear foil (5).

2. The sealing assembly according to claim 1, **characterized in that** the radially inner wall (732a, 732b) of each slot extends at the downstream mouth of said slot by an inclined part (734a, 734b) which tapers from said slot toward the longitudinal axis of the sealing ring (7), each slot (73a, 73b) being thus configured so that the sealing tab (8, 8') can be inserted therein by axial insertion from downstream and so that when it is inserted therein, the radially inner face (820) of its downstream end (82) is in contact with said inclined part (734a, 734b).

3. The sealing assembly according to claim 1 or 2, **characterized in that** the radially outer wall (731a, 731b) of each slot (73a, 73b) extends at the downstream mouth of said slot by a part (735a, 735b) inclined toward the longitudinal axis of the sealing ring (7), so as to limit the axial displacement of the sealing tab (8, 8') toward the downstream.

4. The sealing assembly according to claim 1 or 2, **characterized in that** the nozzle (2) is disposed downstream of the sealing ring (7), **in that** the downstream end of the ring sectors (70a, 70b) is engaged in said anti-wear foil (5) so that the downstream end of the sealing tab (8, 8') faces the anti-wear foil (5), **in that** the anti-wear foil (5) comprises a bottom (50), a radially outer wall (51) and a radially inner wall (52) and **in that** this foil (5) is positioned in said annular groove (223) so that its radially outer wall (51) is in contact with the radially internal face of the radially outer spoiler (221) and so that its radially inner wall (52) is in contact with the radially external face of the radially inner spoiler(222) of the radially outer platform (22).

5. The sealing assembly according to claim 4, **characterized in that** the anti-wear foil (5) has a curved radially outer end (510) which extends facing the upstream face of the radially outer spoiler (221).

6. The sealing assembly according to claim 4 or 5, **characterized in that** the anti-wear foil (5) has a curved radially inner end (520) which extends facing the upstream face of the radially inner spoiler (222) of the radially outer platform (22).

7. The sealing assembly according to any one of the preceding claims, **characterized in that** the edge (84) of the downstream end (82) of the sealing tab (8') is curved toward the outside with respect to the longitudinal axis of the sealing ring (7).

8. The sealing assembly according to claims 4 and 7, **characterized in that** the edge (84) of the downstream end (82) of the sealing tab (8) is in contact with the bottom (50) and the radially inner wall (52) of said anti-wear foil (5).

9. The sealing assembly according to any of the preceding claims, **characterized in that** the ring sectors (70a, 70b) each comprise, at their downstream end, a groove (72) open radially toward the outside, which is configured to receive a hook (40) of the outer casing (4).

10. A turbine of a turbomachine, in particular of an aircraft turbojet or turboprop engine, comprising a fixed outer casing (4) and a plurality of stages each comprising an upstream rotor impeller (3) and a downstream nozzle (2), said nozzle (2) comprising at least one blade (23) extending between a radially inner platform (21) and a radially outer platform (22), the radially outer platform (22) comprising at its upstream end, a radially outer spoiler (221) and a radially inner spoiler (222) which delimit an annular groove (223) open toward the upstream, **characterized in that** it comprises a sealing assembly according to any of claims 1 to 9.
